# EUROPÄISCHE PATENTSCHRIFT

(11) **EP 3 473 509 B1**
(45) Veröffentlichungstag und Bekanntmachung des Hinweises auf die Patenterteilung: **29.04.2020**
(21) Anmeldenummer: 18194152.7
(22) Anmeldetag: 13.09.2018
(51) Int. Cl.: B60T 11/10, B60T 13/26, B60T 13/58

(54) **BREMSMODUL FÜR EIN HYDRAULISCH GEBREMSTES ZUGFAHRZEUG, WELCHES MIT EINEM PNEUMATISCH GEBREMSTEN ANHÄNGEFAHRZEUG KOPPELBAR IST**
BRAKE MODULE FOR A HYDRAULICALLY BRAKED TOWING VEHICLE WHICH CAN BE COUPLED TOGETHER WITH A PNEUMATICALLY BRAKED TRAILER VEHICLE
MODULE DE FREINAGE POUR UN VÉHICULE DE TRACTION À FREINAGE HYDRAULIQUE POUVANT ÊTRE COUPLÉ À UNE REMORQUE INDUSTRIELLE À FREINAGE PNEUMATIQUE

(30) Priorität: 20.10.2017 DE 102017009916
(43) Veröffentlichungstag der Anmeldung: 24.04.2019
(73) Patentinhaber: WABCO GmbH, 30453 Hannover (DE); AGCO International GmbH, 8212 Neuhausen am Rheinfall (CH)
(72) Erfinder: Brütt, Mirko, 30952 Ronnenberg (DE); Frank, Georg, 87616 Marktoberdorf (DE); Prestel, Stefan, 87616 Marktoberdorf (DE); Spremberg, Jan, 30974 Wennigsen (DE)
(74) Vertreter: Bremer, Ulrich

(56) Entgegenhaltungen:
- EP-A1- 2 305 524
- EP-A1- 3 190 015

## Beschreibung

Die Erfindung betrifft ein Bremsmodul für ein hydraulisch gebremstes Zugfahrzeug mit den Merkmalen des Oberbegriffes des Patentanspruchs 1.

Bestimmte hydraulisch gebremste Fahrzeuge, insbesondere landwirtschaftlich oder forstwirtschaftlich genutzte Zugfahrzeuge in Form von Ackerschleppern, Traktoren, Mähdreschern, aber auch leichte Lastkraftwagen weisen eine hydraulische Bremsanlage auf, welche in der Regel aus einem durch ein Fußbremspedal betätigten Bremszylinder besteht, welcher Hydraulikflüssigkeit den entsprechenden Radbremszylindern der Räder des Zugfahrzeugs zuführt. Die an das Zugfahrzeug ankoppelbaren Anhänger sind im Gegensatz zum Zugfahrzeug pneumatisch gebremst. Auf Grund der unterschiedlichen Druckmedien, nämlich Hydraulikflüssigkeit für die Betriebsbremsanlage des Zugfahrzeugs und Druckluft für die Bremsanlage des Anhängerfahrzeuges, ist es bei derartigen Fahrzeugkombinationen notwendig, den hydraulischen Bremsdruck des Zugfahrzeugs in einen pneumatischen Druck für die Bremsanlage des Anhängers umzuwandeln. Seit Jahrzehnten wird hierzu ein am Zugfahrzeug angeordnetes Anhängersteuerventil verwendet, welches beispielsweise von der Anmelderin unter der Teilenummer 470 015 xxx erhältlich ist. Derartige Anhängersteuerventile sind rein mechanisch aufgebaut; bei diesen wird hydraulischer Steuerdruck in pneumatischen Ausgangsdruck umgewandelt und dem Anhängerfahrzeug zugeleitet.

Ein Problem kann sich bei derartigen Fahrzeugen einstellen, wenn aufgrund von Verschleiß oder mechanischen Beschädigungen Leckagen in den Bremssteuerleitungen vom Anhängersteuerventil zum Anhänger auftreten. Herkömmliche, vorwiegend mechanische Systeme, sind bislang nicht in der Lage, solche Leckagen zu erkennen - es kommt zu unkontrollierbaren Luftdruckverlusten, was dazu führt, dass der Anhänger nicht mehr gebremst werden kann.

Aus dem Bereich der rein pneumatisch gebremsten Lastkraftwagen mit einem Gewicht über 7,5 t sind bereits sogenannte Abrisssicherungsmodule oder Abrissventile bekannt, welche dafür sorgen, dass bei Leckage oder Abriss einer Druckleitung zur Anhängerbremsanlage das Anhängerfahrzeug kontrolliert gebremst wird, in dem die Bremszylinder des Anhängerfahrzeuges entlüftet werden. Ein solches Abrissventil ist beispielsweise aus der EP 2 451 681 B1 bekannt. Ein derartiges Abrissventil ist aber nur bei rein pneumatisch gebremsten Fahrzeugen einsetzbar, da dort die Vorsteuerdrücke auf einem zumindest annährend konstanten Bereich gehalten werden. Der Vorsteuerdruck, der im Bremsfall ein voreilendes Bremsen des Anhängerfahrzeuges bewirkt, wird bei diesen Systemen auch zur Ansteuerung des Abrissventils genutzt.

Bei Fahrzeugen mit gemischten Bremssystemen, bei denen also sowohl hydraulische, als auch pneumatische Druckmedien eingesetzt werden, sind aber höchst unterschiedliche Druckniveaus vorhanden, so dass die üblichen, für Lastkraftwagen bestimmten Abrissventile nicht für Fahrzeuge der o. g. Art eingesetzt werden können. Dies gilt insbesondere für solche gattungsgemäßen Fahrzeuge, bei denen ein Druckbegrenzungsventil eingesetzt wird, das dazu bestimmt ist, den pneumatischen Vorsteuerdruck für das Anhängersteuerventil zur Einstellung von Charakteristika der Betriebsbremsen des Anhängerfahrzeuges einzustellen. Hierbei kann der heruntergeregelte Druck unter dem Aktivierungsdruck der Abrisssicherung liegen, was dazu führen würde, dass das Abrisssicherungsmodul nicht anspricht, obwohl der Abrissfall eingetreten ist.

In der DE 19 955 797 A1 und der DE 19 955 798 A1wird jeweils eine Abrisssicherung beschrieben, bei der ein gattungsgemäßes Fahrzeug praktisch rein elektronisch gebremst wird. Für eine vornehmlich mechanisch wirkende Bremseinrichtung ist auch diese Abrisssicherung nicht geeignet.

Aus der DE 197 52 147 B4 ist einer Bremsanlage für ein hydraulisch gebremstes, mit einem pneumatisch gebremsten Anhänger koppelbaren Kraftfahrzeugs bekannt, bei welcher der hydraulische Druck der Betriebsbremse nur mittelbar zur Steuerung der pneumatischen Bremsanlage des Anhängerfahrzeuges genutzt wird. Dort wird der hydraulische Druck der Ausgangsleitungen des Hauptbremszylinders durch einen Drucksensor in ein elektrisches Signal umgewandelt, einer elektronischen Steuereinrichtung zugeführt, welche die gewonnen Drucksignale auswertet und ein Proportional-Relaisventil schaltet, welches zwischen einem Druckluftbehälter und einem rein pneumatisch gesteuerten Anhängersteuerventil zwischengeschaltet ist. Eine Abrisssicherung wird in dieser Schrift nicht thematisiert.

EP 3190015 A1 beschreibt eine Bremseinrichtung eines Zugfahrzeugs, insbesondere eines Traktors, und eine Gruppe von Bremseinrichtungen. Die Bremseinrichtung weist ein Abrissventil auf, das über zwei Betriebsstellungen verfügt, wobei in der ersten Betriebsstellung Druckluft von einem Vorratsbehälter über einen Vorratsanschluss zu einem Ausgangsanschluss, der mit einem Anhängersteuerventil verbunden ist, mit einer geringen Drosselung übertragen wird, und in einer zweiten Betriebsstellung diese Zuführung der Druckluft mit einer erhöhten Drosselung erfolgt. Gemäß einer Ausführungsform ist ein als 3/2-Ventil ausgebildetes Vorsteuerventil vor dem Abrissventil vorgesehen.

EP 2305524 A1 offenbart ein Verfahren um Betrieb einer Bremseinrichtung für ein hydraulisch gebremstes Zugfahrzeug, welches mit einer pneumatisch gebremsten Anhänger koppelbar ist.

Aufgabe der Erfindung ist es, ein Bremsmodul der eingangs geschilderten Art dahingehend zu verbessern, dass eine Abrisssicherungsfunktion bei hydraulisch gebremsten Zugfahrzeugen, welches mit einem pneumatisch gebremsten Anhängefahrzeug koppelbar sind, zu schaffen, welche einfach aufgebaut ist und zuverlässig funktioniert.

Diese Aufgabe wird mit einem Bremsmodul gelöst, welches die Merkmale des Patentanspruchs 1 aufweist.

Die Aufgabe wird also auf überraschend einfache Art und Weise dadurch gelöst, dass das Abrisssicherungsmodul mit einem pneumatischem Vorratsdruck-Eingang und mit einem pneumatischen Abrisssteuerdruckeingang versehen ist, wobei der Abrisssteuerdruckeingang unabhängig von pneumatischen Druckeingängen des Anhängersteuerventils an einen Druckluftbehälter des Zugfahrzeugs angeschlossen ist, wobei am Vorratsdruck-Eingang anstehender Vorratsdruck durch das Abrisssicherungsmodul durchleitbar und einem pneumatischen Vorratsdruckeingang des Anhängersteuerventils zuführbar ist.

Der pneumatische Vorsteuerdruck des Anhängersteuerventils wird also ausschließlich zum Voransteuern der Bremsanlage des Anhängerfahrzeuges genutzt und nicht, wie sonst bei Lastkraftwagen üblich, auch zur Ansteuerung des Abrisssicherungsmoduls. Das macht das Abrisssicherungsmodul unabhängig von Druckschwankungen, die bei Verbindung mit dem Vorsteuerdruck des Anhängersteuerventils entstehen könnten. Es wird direkt oder indirekt der stets gleiche Vorratsdruck genutzt, so dass das Abrisssicherungsmodul präziser anspricht bzw. steuerbar ist. Da das Abrisssicherungsmodul mehr oder weniger unabhängig von Anhängersteuerventil ist, bietet dies den weiteren Vorteil, dass das Abrisssicherungsmodul nicht zwingend mit dem Anhängersteuerventil baulich vereinigt sein muss, sondern auch an entfernter Stelle am Zugfahrzeug anbringbar ist. Gleichwohl besteht aber auch die vorteilhafte Möglichkeit, Abrisssicherungsmodul und Anhängersteuerventil zu einer baulichen Einheit zusammen zu fassen.

Hierbei ist vorgesehen, dass zwischen dem Druckluftbehälter und dem der Abrisssteuerdruckeingang des Abrisssicherungsmoduls ein normalerweise geschlossenes 3/2-Wegeventil angeordnet ist, welches bei Betätigung der Betriebsbremse in Öffnungsstellung geschaltet ist und Druckluft an den Abrisssteuerdruckeingang des Abrisssicherungsmoduls freigibt.

Weiterhin ist vorgesehen , dass das Anhängersteuerventil einen pneumatischen Vorsteuerdruckeingang aufweist, in welchen Druckluft zur Vorsteuerung der Bremsanlage des Anhängefahrzeuges einspeisbar ist.

Diese Ausgestaltung ist dadurch ergänzt, dass vorgesehen ist, dass in einer Vorratsleitung zwischen dem normalerweise geschlossenen 3/2-Wege-Magnetventil und dem Vorsteuerdruckeingang des Anhängersteuerventils ein Druckbegrenzungsventil angeordnet ist.

In einer praktischen Weiterbildung der Erfindung ist vorgesehen, dass im Fall einer Beschädigung der Anhängersteuerleitung ein Ventil des Abrisssicherungsmoduls verschoben und eine Drossel des Abrisssicherungsmoduls wirksam ist und die Verbindung vom Druckluftbehälter zum Bremsmodul abgesperrt und die zu einem Vorrats-Kupplungskopf führende Vorratsleitung entlüftet ist.

In einer besonders bevorzugten Ausgestaltung der Erfindung ist vorgesehen, dass wenigstens das Abrisssicherungsmodul und das Anhängersteuerventil in einem gemeinsamen Gehäuse angeordnet sind.

Alternativ kann vorgesehen sein, dass das Abrisssicherungsmodul und das Anhängersteuerventil aneinander angeflanscht sind.

In einer anderen praktischen Weiterbildung der Erfindung ist vorgesehen, dass das Abrisssicherungsmodul, das Anhängersteuerventil und das 3/2-WegeMagnetventil in einem gemeinsamen Gehäuse angeordnet sind.

Weitere Vorteile und Ausgestaltung der Erfindung werden anhand der Unteransprüche und anhand eines Ausführungsbeispiels in der Zeichnung näher beschrieben.

In der Zeichnung zeigt:
Fig. 1: ein Ausführungsbeispiel eines Schaltschemas eines erfindungsgemäßen Bremsmoduls, und
Fig. 2: schematisch ein Zugfahrzeug, mit daran angebauten Komponenten des Bremsmoduls aus Figur 1.

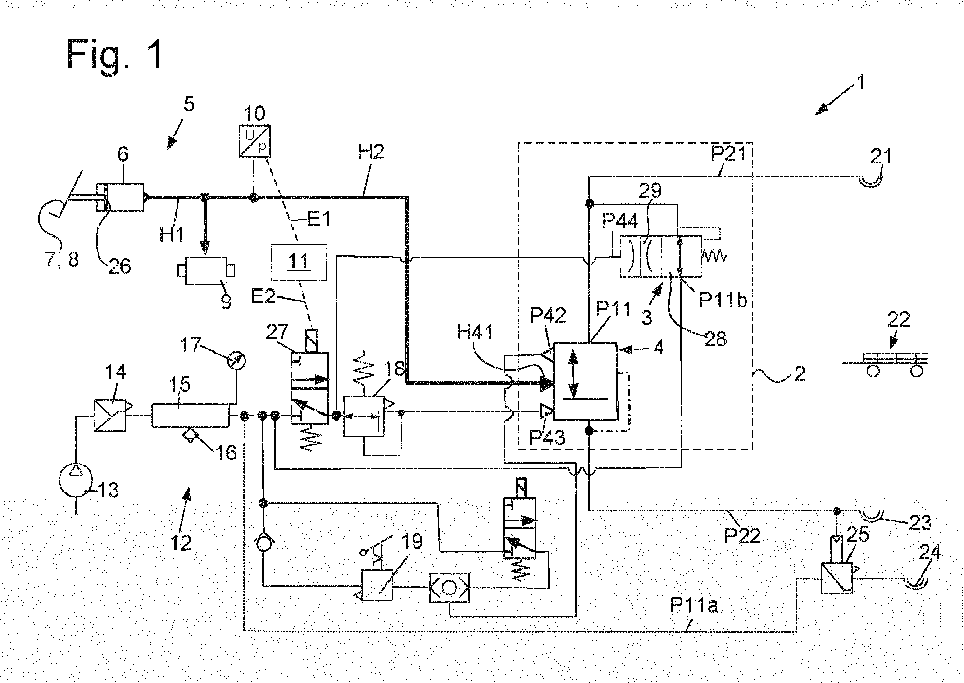

In Figur 1 ist ein Ausführungsbeispiel eines erfindungsgemäßen Bremsmoduls 1 als Schaltschema dargestellt. Die Zeichnungssymbole entsprechen in der Darstellung der DIN 74253, während die pneumatischen bzw. hydraulischen Anschlüsse und Leitungen in Anhalt an die DIN ISO 6786 ausgeführt sind, wobei zur besseren Abgrenzung zu den Bezugsziffern der Bauteile den pneumatischen Leitungen und Anschlüssen ein "P" und den hydraulischen Leitungen und Anschlüssen ein "H" vorangestellt ist, während die elektrischen Leitungen ein Präfix "E" aufweisen.

Das an einem in Figur 1 nicht dargestellten Zugfahrzeug angeordnete Bremsmodul 1 weist innerhalb eines nur schematisch angedeuteten Gehäuses 2 ein Abrisssicherungsmodul 3 und ein Anhängersteuerventil 4 auf.

Außerhalb des Bremsmoduls 1 sind die Komponenten der hydraulisch betätigten Betriebsbremse 5 angeordnet, von denen in Figur 1 lediglich vereinfacht ein Hauptbremszylinder 6 dargestellt ist, welcher durch ein Bremsbetätigungsorgan 7 in Form eines Bremspedals 8 betätigbar ist. Über eine Hydraulikdruckleitung H1 gelangt Hydraulikflüssigkeit zu den einzelnen Radbremszylindern des Zugfahrzeugs, was in Figur 1 lediglich schematisch durch einen Radbremszylinder 9 angedeutet ist. Von der Hydraulikdruckleitung H1 zweigt eine Hydraulikabzweigleitung H2 ab, durch welche Hydraulikflüssigkeit dem Anhängersteuerventil 4 zugeführt wird. An die Hydraulikdruckleitung H1 angeschlossen ist ein Drucksensor 10, welcher den in der Hydraulikdruckleitung H1 herrschenden hydraulischen Druck erfasst und in ein elektrisches Signal umwandelt, welches über eine elektrische Leitung E1 einer Steuerelektronik 11 des Zugfahrzeugs zugeführt wird, um eine Betätigung eines Bremspedals 8 zu detektieren. Alternativ zu dem Drucksensor 10 kann die Betätigung eines Bremspedals 8 über nicht dargestellte Pedalschalter erkannt werden, die in bekannter Weise zur Aktivierung der nicht dargestellten Bremsleuchten bereits vorhanden sein könnten. Bevorzugt wird aber der Drucksensor 10, der ein entsprechendes Signal der Steuerelektronik 11 direkt zuführt, zumal wenn ein Drucksensor 10 eingesetzt wird, der nicht nur den Beginn der Bremsung erfassen und der Steuerelektronik 11 übermitteln kann, sondern der auch eine Druckveränderung erfassen und übermitteln kann.
Neben der Betriebsbremse 6, durch welche hydraulischer Druck erzeugbar ist, ist am Zugfahrzeug noch eine Drucklufterzeugungsanlage 12 vorhanden, welche aus einem mit dem Antriebsmotor des Zugfahrzeugs verbundenen Kompressor 13, einen Druckregler 14, einen Druckluftspeicher 15 mit Entwässerungsventil 16 und Manometer 17, sowie einem dem Druckluftbehälter 15 nachgeordneten Druckbegrenzungsventil 18 besteht. Über dieses Druckbegrenzungsventil 18 wird ein pneumatischer Vorratsdruck in Höhe von etwa 8,5 bar einem pneumatischen Vorsteuerdruck-Eingang P43 dem Anhängersteuerventil 4 zugeführt. Parallel zu diesem Druckbegrenzungsventil 18 ist ein Handbremsventil 19 mit dem Druckluftbehälter 15 verbunden, welches bei Betätigung einen pneumatischen Druck an einen pneumatischen Steuerdruckeingang P42 an das Bremsmodul 1 abgibt.

Der Vorratsdruck wird aus dem Druckluftbehälter 15 über den pneumatischen Vorratsdruck-Eingang P11 durch das Bremsmodul 1 durchgeleitet und über einen pneumatischen Ausgang P21 des Bremsmoduls 1 zu einem Vorrats-Kupplungskopf 21 geführt, an welchem eine entsprechende Vorratsleitung eines in Figur 1 nur angedeuteten Anhängefahrzeugs 22 ankoppelbar ist. Das Anhängefahrzeug 22 ist über entsprechende, nicht dargestellte Kupplungsköpfe mit dem Vorrats-Kupplungskopf 21 sowie einem Steuerdruck-Kupplungskopf 23 verbindbar. Für den Fall, dass an das Zugfahrzeug ein Anhängefahrzeug älterer Bauart mit einer Einleitungsbremse angekoppelt werden soll, kann noch ein Einleitungs-Kupplungskopf 24 in das System eingebunden werden, welcher durch ein Relaisventil 25 mit dem Steuerdruck-Kupplungskopf 23 bzw. über eine pneumatische Vorratsdruckleitung P11a mit dem Druckluftbehälter 15 verbunden ist.

Der Vorratsdruck wird aus dem Druckluftbehälter 15 auch einem pneumatischen Vorratsdruck-Eingang P11b des Abrisssicherungsmoduls 3 zugeführt. Bei intakter Anhängersteuerleitung P22 wird der Vorratsdruck durch das Abrisssicherungsmodul 3 durchgeschleust und einem pneumatischen Vorratsdruckeingang P11 des Anhängerbremsventils 4 zugeführt.

Die Zufuhr von Druckluft aus dem Druckluftspeicher 15 über das Druckbegrenzungsventil 18 zum Bremsmodul 1 wird durch ein normalerweise geschlossenes 3/2-Wege-Magnetventil 27 gesteuert, welches über eine elektrische Leitung E2 mit dem Steuergerät 11 verbunden ist. Drückt der Fahrer das Bremspedal 8, wird ein elektrisches Signal generiert, durch welches ein Schalten des 3/2-Wege-Magnetventil 27 veranlasst und Vorratsdruck über das Druckbegrenzungsventil 18 zum Bremsmodul 1 zugeführt wird.

Im Normalfall, also bei intakter Steuerleitung P22 läuft eine Bremsung des Zugfahrzeugs mit dem daran angekoppelten Anhängerfahrzeug 22 wie folgt ab:
Tritt der Fahrer auf das Bremspedal 8, bewegt sich entsprechender Bewegung des Bremspedals 8 ein Kolben 26 des Hauptbremszylinders 6 und drückt Hydraulikflüssigkeit über die Hydraulikdruckleitung H1 zu den Radbremszylindern 9 des Zugfahrzeugs, wodurch die Räder des Zugfahrzeugs gebremst werden. Die Bewegung des Kolbens 26 des Hauptbremszylinders 6 erzeugt einen hydraulischen Druck, welcher über die hydraulische Leitung H2 dem hydraulischen Steuereingang H41 des Anhängerbremsventils 4 zugeführt wird, was eine Bewegung eines Hydraulikkolbens bewirkt. Gleichzeitig wird das 3/2-Wege-Magnetventil 27 geöffnet und pneumatischer Vorratsdruck über das Druckbegrenzungsventil 18 dem Abrisssicherungsmodul 3 zugeführt, durch dieses durchgeleitet und dem Steuereingang P11 des Anhängerbremsventils 4 zugeführt, was zusammengenommen ein Einspeisen von Steuerdruck in die Steuerleitung P22 des Anhängerfahrzeuges bewirkt, wodurch dieses gebremst wird. Da ein Durchleiten von Druckluft durch das Druckbegrenzungsventil zum Vorsteuereingang P43 bereits erfolgte, wurde das Anhängefahrzeug 22 bereits vorgebremst, was der Fachmann als voreilendes Bremsen bezeichnet und ein Aufschieben des Anhängefahrzeuges 22 auf das Zugfahrzeug verhindern soll.

Kommt es zu einer Beschädigung der Anhängersteuerleitung P22, beispielsweise durch Bruch, Abriss oder durch sonstige Einflüsse, kommt es also zu einem Druckabfall durch unkontrolliert aus der Anhängersteuerleitung P22 ausströmende Luft, wird ein Ventil 28 des Abrisssicherungsmodul 3 verschoben, wodurch eine Drossel 29 zur Wirkung kommt. Hierdurch kann keine Druckluft mehr aus dem Druckluftbehälter 15 zum Bremsmodul 1 nachströmen, so dass die Vorratsleitung P21 entlüftet wird, was zur Entlüftung der Bremszylinder des Anhängefahrzeuges 22 führt und somit zu seiner allmählichen Bremsung.

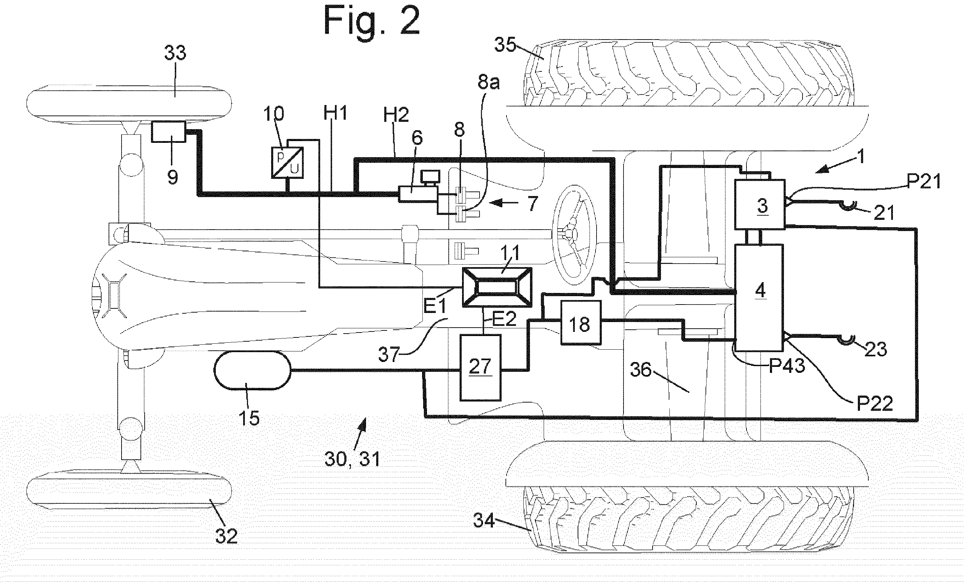

In Figur 2 ist ein Zugfahrzeug 30 in Form eines Ackerschleppers 31 dargestellt. Dieser weist in an sich bekannter Weise zwei gelenkte Vorderräder 32, 33 und zwei ungelenkte Hinterräder 34, 35 auf. Den Vorderrädern 32, 33 und den Hinterrädern 34, 35 ist jeweils eine nicht dargestellte Radbremse zugeordnet, die jeweils durch einen Radbremszylinder 9 betätigbar ist, wobei in Figur 2 vereinfachend nur ein Radbremszylinder 9 dargestellt ist, welcher dem rechten Vorderrad 33 zugeordnet ist. Figur 2 soll vor allem veranschaulichen, wo am Zugfahrzeug 30 die wesentlichen Komponenten des Bremsmoduls 1 angeordnet sind bzw. angeordnet sein können. In Figur 2 ist auch zu erkennen, dass - wie bei Ackerschleppern üblich - das Bremsbetätigungsorgan 7 zwei Bremspedale 8, 8a aufweist, durch welche bei Fahrt abseits befestigter Straßen die Bremsen der rechten bzw. linken Fahrzeugseite zur Erzeugung von Lenkbremsungen betätigt werden können. Die Bremspedale 8, 8a sind mechanisch mit dem Hauptbremszylinder 6 verbunden, durch welchen hydraulischer Druck über die Hydraulikdruckleitung H1 den Radbremszylindern 9 zugeführt wird. Von der Hydraulikdruckleitung H1 zweigt die Hydraulikabzweigleitung H2 ab, durch welche hydraulischer Steuerdruck an das in Figur 2 nur schematisch dargestellte Anhängersteuerventil 4 zugeführt wird. Die Anhängersteuerventil 4 ist im Bereich einer Hinterachse 36 des Zugfahrzeugs 34 angeordnet, ebenso wie das Abrisssicherungsmodul 3. Die Steuerelektronik 11, welche gemäß Figur 2 auf einem Getriebeblock 37 angeordnet ist, kann auch an anderer Stelle des Fahrzeugs angeordnet sein, beispielsweise kann sie am Bremsmodul 1 angeflanscht sein, oder kann sich auch an ganz anderer Stelle des Zugfahrzeugs befinden. Ebenso ist es in abweichender Darstellung nach Figur 2 möglich, die Anhängersteuerventil 4 an das elektro-pneumatische Bremsmodul anzuflanschen.

Auf die geschilderte Weise wird ein Bremsmodul 1 geschaffen, das auf Grund seiner Module 3 und 4 beliebig miteinander kombinierbar ist bzw. deren Module 3, 4 sich an beliebiger bzw. besonders geeigneter Stelle des Zugfahrzeugs 30 anordnen lassen. So können die einzelnen Module 3, 4 aneinander angeflanscht oder verteilt am Zugfahrzeug 30 angebracht sein. Ebenso ist es möglich, Anhängersteuerventil 4 und das Abrisssicherungsmodul in einem gemeinsamen Gehäuse anzuordnen. In einem solchen Gehäuse können auch das 3/2-Wegeventil 27 und/oder das Druckbegrenzungsventil 18 angeordnet sein.

Das in Figur 1 beschriebene Ausführungsbeispiel eines erfindungsgemäßen Bremsmoduls 1 zeigt ein Anhängerbremsventil 4 mit einem hydraulischen Steuereingang H41, wie dies für eine sogenannte Einkreisbremsanlage bekannt ist. Alternativ könnte im Falle einer sogenannten Zweikreisbremsanlage ein Anhängerbremsventil 4 mit zwei hydraulischen Steuereingängen für jeden Bremskreis verwendet werden.

Neben der zuvor geschilderten Verwendung des erfindungsgemäßen Bremsmoduls 1 für rein hydraulisch gebremste Zugfahrzeuge ist es ebenso denkbar, das Bremsmodul für Zugfahrzeuge einzusetzen, welche über eine so genannte "Air over Hydraulic" (AoH) verfügen. Bei derartigen, beispielsweise aus der DE 10 2011 122 637 A1 bekannten Systemen ist grundsätzlich die gesamte Bremsanlage pneumatisch ausgestaltet, lediglich die Radbremszylinder der einzelnen Räder werden hydraulisch gebremst. Bei diesen Systemen werden so genannten AoH-Konverter eingesetzt, die pneumatischen Druck in hydraulischen Druck für die Radbremszylinder umwandeln. Eigentlich wäre es bei diesen Fahrzeugen möglich, eine rein pneumatische Ansteuerung eines entsprechend ausgebildeten, an sich bekannten Redundanz-Ventils zu ermöglichen. Unter Umständen und für besondere Anwendungsfälle kann es jedoch vorteilhaft sein, wenn der hydraulische Druck der Radbremszylinder herangezogen wird, um ein Bremsmodul 1 gemäß der zuvor beschriebenen Art zu bedienen.

### Bezugszeichenliste (Bestandteil der Beschreibung)

- 1: Bremsmodul
- 2: Gehäuse
- 3: Abrisssicherungsmodul
- 4: Anhängersteuerventil
- 5: Betriebsbremse
- 6: Hauptbremszylinder
- 7: Bremsbetätigungsorgan
- 8: Bremspedal
- 8a: Bremspedal
- 9: Radbremszylinder
- 10: Drucksensor
- 11: Steuerelektronik
- 12: Drucklufterzeugungsanlage
- 13: Kompressor
- 14: Druckregler
- 15: Druckluftbehälter
- 16: Entwässerungsventil
- 17: Manometer
- 18: Druckbegrenzungsventil
- 19: Handbremsventil
- 20: Redundanzventil
- 21: Vorratsdruck-Kupplungskopf
- 22: Anhängefahrzeug
- 23: Steuerdruck-Kupplungskopf
- 24: Einleitungs-Kupplungskopf
- 25: Relaisventil
- 26: Kolben
- 27: 3/2-Wege-Magnetventil
- 28: Ventil
- 29: Drossel
- 30: Zugfahrzeug
- 31: Ackerschlepper
- 32: Vorderrad
- 33: Vorderrad
- 34: Hinterrad
- 35: Hinterrad
- 36: Hinterachse
- 37: Getriebeblock

- E1: elektrische Leitung
- E2: elektrische Leitung
- H1: Hydraulikdruckleitung
- H2: Hydraulikabzweigleitung
- H41: hydraulischer Steuereingang

- P11: pneumatischer Vorratsdruck-Eingang
- P11a: pneumatische Vorratsdruckleitung
- P11b: pneumatischer Vorratsdruck-Eingang von 3
- P21: pneumatischer Ausgang
- P22: pneumatischer Steuerdruck-Ausgang
- P42: pneumatischer Steuerdruckeingang
- P43: pneumatischer Vorsteuerdruckeingang
- P44: pneumatischer Abrisssteuerdruckeingang

## Patentansprüche

1. Bremsmodul (1) für ein hydraulisch gebremstes Zugfahrzeug (30; 31), welches mit einem pneumatisch gebremsten Anhängefahrzeug (22) koppelbar ist, wobei das Zugfahrzeug eine hydraulisch betätigte Betriebsbremse (5) aufweist, welche wenigstens einen durch ein Bremsbetätigungsorgan (7, 8; 8a) betätigbaren Hauptbremszylinder (6) zur Erzeugung eines Hydraulikdrucks in wenigstens einem Radbremszylinder (9) wenigstens eines Rades (32; 33; 34; 35) des Zugfahrzeuges (30; 31) aufweist, und wobei das Bremsmodul (1) ein Anhängersteuerventil (4) aufweist, welches über einen hydraulischen Steuereingang (H41) an eine vom Hauptbremszylinder (6) abgehende hydraulische Druckleitung (H1; H2) und über einen pneumatischen Vorratsdruckeingang (P11) mit dem Druckluftbehälter (15) verbunden ist,
wobei der hydraulische Steuerdruck das Maß des pneumatischen Ausgangsdrucks an einem pneumatischen Ausgang (P22) der Anhängersteuerventil (4) bestimmt, und wobei das Bremsmodul (1) ein Abrisssicherungsmodul (3) aufweist, welches bei Leckage oder Abriss der Steuerleitung (P22) vom Anhängersteuerventil (4) zur Bremsanlage des Anhängefahrzeuges (22) eine Vorratsleitung (P21) zu einem Vorratsdruck-Kupplungskopf (21) absperrt und ein Entlüften der Bremsanlage des Anhängefahrzeuges (22) bewirkt,
wobei das Abrisssicherungsmodul (3) mit einem pneumatischem Vorratsdruck-Eingang (P11b) und mit einem pneumatischen Abrisssteuerdruckeingang (P44) versehen ist, wobei der Abrisssteuerdruckeingang (P44) unabhängig von pneumatischen Druckeingängen (P42, P43) des Anhängersteuerventils (4) und an einen Druckluftbehälter (15) des Zugfahrzeugs (30; 31) angeschlossen ist, wobei am Vorratsdruck-Eingang (P11b) anstehender Vorratsdruck durch das Abrisssicherungsmodul (3) durchleitbar und dem pneumatischen Vorratsdruckeingang (P11) des Anhängersteuerventils (4) zuführbar ist,
wobei zwischen dem Druckluftbehälter (15) und dem Abrisssteuerdruckeingang (P44) des Abrisssicherungsmoduls (3) ein normalerweise geschlossenes 3/2-Wegeventil (27) angeordnet ist, welches bei Betätigung der Betriebsbremse (5) in Öffnungsstellung geschaltet ist und Druckluft an den Abrisssteuerdruckeingang (P44) des Abrisssicherungsmoduls (3) freigibt,
**dadurch gekennzeichnet, dass**
das Anhängersteuerventil (4) einen pneumatischen Vorsteuerdruckeingang (P43) aufweist, in welchen Druckluft zur Vorsteuerung der Bremsanlage des Anhängefahrzeuges (22) einspeisbar ist, und
in einer Vorratsleitung zwischen dem normalerweise geschlossenen 3/2-Wege-Magnetventil (27) und dem Vorsteuerdruckeingang (P43) des Anhängersteuerventils (4) ein Druckbegrenzungsventil (18) angeordnet ist.

2. Bremsmodul nach Anspruch 1, **dadurch gekennzeichnet, dass** im Fall einer Beschädigung der Anhängersteuerleitung (P22) ein Ventil (28) des Abrisssicherungsmoduls (3) verschoben und eine Drossel (29) des Abrisssicherungsmoduls (3) wirksam ist und die Verbindung vom Druckluftbehälter (15) zum Bremsmodul (1) abgesperrt und die zu einem Vorrats-Kupplungskopf (21) führende Vorratsleitung (P21) entlüftet ist.

3. Bremsmodul wenigstens nach Anspruch 1, **dadurch gekennzeichnet, dass** wenigstens das Abrisssicherungsmodul (3) und das Anhängersteuerventil (4) in einem gemeinsamen Gehäuse (2) angeordnet sind.

4. Bremsmodul nach einem der Ansprüche 1 oder 2, **dadurch gekennzeichnet, dass** das Abrisssicherungsmodul (3) und das Anhängersteuerventil (4) aneinander angeflanscht sind.

5. Bremsmodul nach Anspruch 1 oder 2, **dadurch gekennzeichnet, dass** das Abrisssicherungsmodul (3), das Anhängersteuerventil (4) und das 3/2-Wege-Magnetventil (27) in einem gemeinsamen Gehäuse (2) angeordnet sind.

## Claims

1. Brake module (1) for a hydraulically braked towing vehicle (30; 31) which can be coupled to a pneumatically braked towed vehicle (22), wherein the towing vehicle has a hydraulically activated service brake (5) which has at least one master brake cylinder (6), which can be activated by a brake activation element (7, 8; 8a), for generating a hydraulic pressure in at least one wheel brake cylinder (9) of at least one wheel (32; 33; 34; 35) of the towing vehicle (30; 31), and wherein the brake module (1) has a towed vehicle control valve (4) which is connected via a hydraulic control inlet (H41) to a hydraulic pressure line (H1; H2), which leaves the master brake cylinder (6), and via a pneumatic supply pressure inlet (P11) to the compressed air reservoir (15), wherein the hydraulic control pressure determines the level of the pneumatic output pressure at a pneumatic outlet (P22) of the towed vehicle control valve (4), and wherein the brake module (1) has a breakaway protection module (3) which in the case of leakage or breaking away of the control line (P22) from the towed vehicle control valve (4) to the brake system of the towed vehicle (22) shuts off a supply line (P21) to a supply pressure coupling head (21) and brings about de-aerating of the brake system of the towed vehicle (22), wherein the breakaway protection module (3) is provided with a pneumatic supply pressure inlet (P11b) and with a pneumatic breakaway control pressure inlet (P44), wherein the breakaway control pressure inlet (P44) is connected to a compressed air reservoir (15) of the towing vehicle (30; 31) independently of pneumatic pressure inlets (P42, P43) of the towed vehicle control valve (4), wherein supply pressure which is present at the supply pressure inlet (P11b) can be passed through the breakaway protection module (3) and can be fed to the pneumatic supply pressure inlet (P11) of the towed vehicle control valve (4), wherein a normally closed 3/2-way valve (27) is arranged between the compressed air reservoir (15) and the breakaway control pressure inlet (P44) of the breakaway protection module (3), this 3/2-way valve (27) being switched into an open position when the service brake (5) is activated and releasing compressed air to the breakaway control pressure inlet (P44) of the breakaway protection module (3), **characterised in that** the towed vehicle control valve (4) has a pneumatic pilot-control pressure inlet (P43), into which compressed air can be fed for pilot-controlling the brake system of the towed vehicle (22), and a pressure-limiting valve (18) is arranged in a supply line between the normally closed 3/2-way solenoid valve (27) and the pilot-control pressure inlet (P43) of the towed vehicle control valve (4).

2. Brake module according to claim 1, **characterised in that** in the case of damage to the towed vehicle control line (P22) a valve (28) of the breakaway protection module (3) is displaced and a restrictor (29) of the breakaway protection module (3) is active and the connection from the compressed air reservoir (15) to the brake module (1) is shut off and the supply line (P21) leading to a supply coupling head (21) is de-aerated.

3. Brake module at least according to claim 1, **characterised in that** at least the breakaway protection module (3) and the towed vehicle control valve (4) are arranged in a common housing (2).

4. Brake module according to either of claims 1 and 2, **characterised in that** the breakaway protection module (3) and the towed vehicle control valve (4) are flange-connected to one another.

5. Brake module according to claim 1 or 2, **characterised in that** the breakaway protection module (3), the towed vehicle control valve (4) and the 3/2-way solenoid valve (27) are arranged in a common housing (2).

## Revendications

1. Module de freinage (1) pour un véhicule de traction à freinage hydraulique (30, 31) pouvant être couplé à un véhicule tracté à freinage pneumatique (22), le véhicule de traction présentant un frein de service (5) actionné hydrauliquement qui présente un maître-cylindre (6) pouvant être actionné par un organe d'actionnement de frein (7, 8, 8a) pour générer une pression hydraulique dans au moins un cylindre de frein de roue (9) d'au moins une roue (32, 33, 34, 35) du véhicule de traction (30, 31) et le module de freinage (1) présentant une valve de commande de véhicule tracté (4) qui est reliée au réservoir d'air comprimé (15) via une entrée de commande hydraulique (H41) à une conduite de pression hydraulique (H1, H2) sortant du cylindre-maître (6) et via une entrée de pression de réserve pneumatique (P11),
la pression de commande hydraulique déterminant le niveau de la pression pneumatique sortante à une sortie pneumatique (P22) de la valve de commande de véhicule tracté (4), et le module de freinage (1) présentant un module de sécurité de rupture (3), qui ferme une conduite de réserve (P21) menant à une tête de couplage de pression de réserve (21) et actionne une purge d'air du système de freinage du véhicule tracté (22) en cas de fuite ou de rupture de la conduite de commande (P22) qui mène à la valve de commande de véhicule tracté (4) au système de freinage du véhicule tracté (22),
le module de sécurité de rupture (3) étant muni d'une entrée de pression de réserve pneumatique (P11b) et d'une entrée de pression de commande de rupture (P44), l'entrée de pression de commande de rupture (P44) étant indépendante d'entrées de pression pneumatiques (P42, P43) de la valve de commande de véhicule tracté (4) et raccordée à un réservoir d'air comprimé (15) du véhicule de traction (30, 31), la pression de réserve régnant à l'entrée de pression de réserve (P11b) pouvant être passée à travers le module de sécurité de rupture (3) et introduite à l'entrée de pression de réserve pneumatique (P11) de la valve de commande de véhicule tracté (4),
entre le réservoir d'air comprimé (15) et l'entrée de pression de commande de rupture (P44) du module de sécurité de rupture (3) étant disposée une valve à 3/2 voies (27) normalement fermée qui est commutée en position d'ouverture et libère de l'air comprimé à l'entrée de pression de commande de rupture (P44) du module de sécurité de rupture (3) lorsque le frein de service (5) est actionné,
**caractérisé en ce que**
la valve de commande de véhicule tracté (4) présente une entrée de pression pilote pneumatique (P43) qui peut être alimentée en air comprimé pour la commande pilote du système de freinage du véhicule tracté (22), et
un limiteur de débit (18) est disposé dans une conduite de réserve entre la valve magnétique 3/2 voies (27) normalement fermée et l'entrée de pression de commande pilote (P43) de la valve de commande de véhicule tracté (4).

2. Module de freinage suivant la revendication 1, **caractérisé en ce qu'**en cas d'endommagement de la conduite de commande de véhicule tracté (P22), une valve (28) du module de sécurité de rupture (3) est déplacée et un étrangleur (29) du module de sécurité de rupture (3) est actif et la liaison entre le réservoir d'air comprimé (15) et le module de freinage (1) est coupée et la conduite de réserve (P21) menant à une tête de couplage de réserve (21) est purgée.

3. Module de freinage suivant au moins la revendication 1, **caractérisé en ce qu'**au moins le module de sécurité de rupture (3) et la valve de commande de véhicule tracté (4) sont disposés dans un boîtier commun (2).

4. Module de freinage suivant une des revendications 1 ou 2, **caractérisé en ce que** le module de sécurité de rupture (3) et la valve de commande de véhicule tracté (4) sont bridés l'un sur l'autre.

5. Module de freinage suivant la revendication 1 ou 2, **caractérisé en ce que** le module de sécurité rupture (3) et la valve de commande de véhicule tracté (4) et la valve magnétique 3/2 (27) sont disposés dans un boîtier commun (2).
